# EUROPÄISCHE PATENTSCHRIFT

(11) **EP 1 001 885 B1**
(45) Veröffentlichungstag und Bekanntmachung des Hinweises auf die Patenterteilung: **25.07.2001**
(21) Anmeldenummer: 98934961.8
(22) Anmeldetag: 15.06.1998
(51) Int. Cl.: B42D 15/10

(54) **VERFAHREN UND VORRICHTUNG ZUM ZUSAMMENFÜHREN UND VERBINDEN VON KUNSTSTOFFKARTEN UND KARTENTRÄGERN**
METHOD AND DEVICE FOR PUTTING TOGETHER AND ASSEMBLING CARD PLATES AND CARD RACKS
PROCEDE ET DISPOSITIF POUR REUNIR ET ASSEMBLER DES CARTES EN PLASTIQUE ET DES SUPPORTS DE CARTE

(30) Priorität: 08.08.1997 DE 19734483
(43) Veröffentlichungstag der Anmeldung: 24.05.2000
(73) Patentinhaber: BÖWE SYSTEC AG, 86159 Augsburg (DE)
(72) Erfinder: WEINMANN, Karlheinz, D-86919 Utting (DE)
(74) Vertreter: Schoppe, Fritz, Dipl.-Ing.
(86) Internationale Anmeldenummer: EP9803604
(87) Internationale Veröffentlichungsnummer: WO9907561

(56) Entgegenhaltungen:
- DE-C- 19 508 282
- US-A- 4 429 217

## Beschreibung

Die vorliegende Erfindung bezieht sich auf ein Verfahren und eine Vorrichtung zum Zusammenführen und Verbinden von Kunststoffkarten und Kartenträgern, insbesondere auf ein Verfahren und eine Vorrichtung, welche im sogenannten Off-Line-Betrieb arbeiten.

Allgemein können mit bekannten Systemen Kunststoffkarten, wie zum Beispiel dicke Kunststoffkarten vom Typ CR-80 mit Kartenträgern automatisch in variabler Stückzahl verbunden (appliziert) werden. Die mit Kunststoffkarten verbundenen Kartenträger werden dann beispielsweise in einer Kuvertierstation in Kuverts verpackt und entweder geschuppt abgelegt oder einer weiteren Verarbeitung zugeführt, wie zum Beispiel dem Sortieren oder Umreifen.

Bei einem bekannten Verfahren und einer bekannten Vorrichtung werden vorsortierte und personalisierte Kunststoffkarten auf vorsortierte und personalisierte Kartenträger aufgebracht. Hierbei bedeutet die Bezeichnung "personalisiert", daß die Kunststoffkarte bzw. der Kartenträger bereits mit den notwendigen Angaben, wie zum Beispiel Name, Adresse etc., versehen ist. Die Kartenträger können hierbei aus einem Endlosstapel oder aus einem Einzelblattstapel zugeführt werden.

Eine solche bekannte Vorrichtung zum Applizieren von Kunststoffkarten und Kartenträgern umfaßt eine Revolvereinrichtung mit vier Magazinen, aus der einzelne Kunststoffkarten ausgegeben werden und einer Leseeinrichtung zugeführt werden. In der Leseeinrichtung wird eine Identifikationsnummer (ID-Nummer) der Kunststoffkarte gelesen und eine Verarbeitungseinrichtung (VE) erfaßt und speichert diese. Anschließend wird die Kunststoffkarte zu einem Applizierer geleitet. Dem Applizierer wird ferner ein Kartenträger zugeführt, welcher in einem Stapel enthalten ist, der die Kartenträger in vorsortierter Form enthält. Die Kartenträger weisen bereits die entsprechenden Daten auf. Vor dem Zuführen des Kartenträgers zu dem Applizierer wird die auf dem Kartenträger aufgedruckte Identifikationsnummer gelesen und mit der Identifikationsnummer derjenigen Karte verglichen, welche zur Verbindung mit dem Kartenträger in dem Applizierer ansteht. Bei einer Übereinstimmung der Identifikationsnummern erfolgt eine Verbindung der Kunststoffkarte und des Kartenträgers in dem Applizierer.

Der Nachteil einer solchen Vorrichtung besteht darin, daß sowohl auf dem Kartenträger als auch auf der Kunststoffkarte selbst die Identifikationsnummer vorhanden ist, welche in eindeutiger Weise den auf dem Kartenträger aufgedruckten personenbezogenen Daten zugeordnet werden kann. Durch die Identifikationsnummer kann beispielsweise auf eine Datenbank zugegriffen werden, in der persönliche Daten der Karteninhaber gespeichert sind. Durch das oben beschriebene bekannte System wird somit der Zugriff auf persönliche Daten einer Person, beispielsweise durch einen unerlaubten Zugriff auf eine Datenbank durch Dritte, ermöglicht.

Aus der DE 195 08 282 C1 ist eine Zusammenführ- und Verbindungseinrichtung bekannt, welche die oben beschriebenen Nachteile hinsichtlich des mangelhaften Datenschutzes vermeidet. Anstelle der Identifikationsnummer wird eine sogenannte Druckauftragsnummer verwendet, anhand welcher vor dem Verbinden von Karte und Träger in dem Applizierer bestimmt wird, ob diese übereinstimmen. Die dort beschriebene Einrichtung arbeitet im sogenannten On-Line-Betrieb, d. h. daß anstelle des Bereitstellens von vorgedruckten Kartenträgern in der Einrichtung ein Drucker vorgesehen ist, welcher die Kartenträger mit den erforderlichen Daten bedruckt, und den so bedruckten Kartenträger zu dem Applizierer zuführt, wo dann bestimmt wird, ob die zur Verbindung anstehende Kunststoffkarte und der zur Verbindung anstehende Kartenträger zusammenpassen.

Ausgehend von dem Stand der Technik liegt der vorliegenden Erfindung die Aufgabe zugrunde, ein verbessertes Verfahren und eine verbesserte Vorrichtung zum Zusammenführen und Verbinden einer Kunststoffkarte und eines Kartenträgers zu schaffen, welche im Off-Line-Betrieb arbeiten.

Diese Aufgabe wird durch ein Verfahren gemäß Anspruch 1, Anspruch 2, Anspruch 3 und Anspruch 4, sowie durch eine Vorrichtung gemäß Anspruch 8, Anspruch 9 und Anspruch 10 gelöst.

Die vorliegende Erfindung schafft ein Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, wobei Datensätze mit den Identifikationsmarkierungen (ID), die den Kunststoffkarten zugeordnet sind, und mit zu jeder Identifikationsmarkierung zugeordneter Druckauftragsnummer (NR) vorgesehen sind, mit folgenden Schritten:
- Geordnetes Bereitstellen der Kunststoffkarten (S106);
- Geordnetes Bereitstellen der bedruckten Kartenträger, die jeweils mit einer Druckauftragsnummer (NR) bedruckt sind (S108);
- Erfassen der Identifikationsmarkierung (ID) einer Kunststoffkarte (S110) ;
- Erfassen der Druckauftragsnummer (NR) eines Kartenträgers (S112);
- anhand des Datensatzes Bestimmen, ob die zur Verbindung anstehende Kunststoffkarte und der Kartenträger zusammenpassen (S114); und
- falls die Kunststoffkarte und der Kartenträger zusammenpassen, Zusammenführen und Verbinden derselben (S116).

Die vorliegende Erfindung schafft ein Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit folgenden Schritten:
- Bereitstellen von Datensätzen mit Identifikationsmarkierungen, die den Kunststoffkarten zugeordnet sind;
- Zuordnen einer Druckauftragsnummer zu jedem Datensatz;
- geordnetes Bereitstellen der Kunststoffkarten;
- geordnetes Bereitstellen der bedruckten Kartenträger, die jeweils mit einer Druckauftragsnummer bedruckt sind;
- Erfassen der Identifikationsmarkierung einer Kunststoffkarte;
- Erfassen der Druckauftragsnummer eines Kartenträgers;
- anhand des Datensatzes, Bestimmen, ob die zur Verbindung anstehende Kunststoffkarte und der Kartenträger zusammenpassen; und
- falls die Kunststoffkarte und der Kartenträger zusammenpassen, Zusammenführen und Verbinden derselben.

Die vorliegende Erfindung schafft ein Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch folgende Schritte:
- Bereitstellen von Datensätzen mit Identifikationsmarkierungen, die den Kunststoffkarten zugeordnet sind;
- Zuordnen einer Druckauftragsnummer zu jedem Datensatz;
- geordnetes Bereitstellen der Kunststoffkarten;
- geordnetes Bereitstellen der bedruckten Kartenträger, die jeweils mit einer Druckauftragsnummer bedruckt sind;
- Erfassen der Identifikationsmarkierung einer Kunststoffkarte;
- anhand des Datensatzes, Zuordnen einer Druckauftragsnummer zu der Kunststoffkarte, deren Identifikationsmarkierung erfaßt wurde;
- Erfassen der Druckauftragsnummer eines Kartenträgers;
- anhand der Druckauftragsnummern, Bestimmen, ob die zur Verbindung anstehende Kunststoffkarte und der Kartenträger zusammenpassen; und
- falls die Kunststoffkarte und der Kartenträger zusammenpassen, Zusammenführen und Verbinden derselben.

Die vorliegende Erfindung schafft ein Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit
a) einem Datensatzerzeugungsschritt, der folgende Schritte aufweist:
   a1) Bereitstellen der Kunststoffkarte;
   a2) Erfassen einer Identifikationsmarkierung der Kunststoffkarte; und
   a3) Erzeugen eines Datensatzes durch Auslesen einer Datenbank mittels der Identifikationsmarkierung und Zuordnen einer Druckauftragsnummer zu den aus der Datenbank ausgelesenen Daten, wobei die Druckauftragsnummer nicht in eindeutiger Weise den ausgelesenen, personenbezogenen Daten zugeordnet ist; und
b) einem Zusammenführungs- und Verbindungsschritt, der folgende Schritte aufweist:
   b1) Bereitstellen eines bedruckten Kartenträgers, der eine Druckauftragsnummer aufweist;
   b2) Bereitstellen der Kunststoffkarte;
   b3) Erfassen der Druckauftragsnummer des bedruckten Kartenträgers;
   b4) Erfassen der Identifikationsmarkierung der Kunststoffkarte;
   b5) Bestimmen, anhand des durch die Identifikationsmarkierung festgelegten Datensatzes, ob die in dem festgelegten Datensatz enthaltene Druckauftragsnummer mit der erfaßten Druckauftragsnummer des bedruckten Kartenträgers übereinstimmt; und
   b6) Falls die Druckauftragsnummern übereinstimmen, Zusammenführen und Verbinden von Kunststoffkarte und Kartenträger.

Die vorliegende Erfindung schafft eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit
- einer Einrichtung zum geordneten Bereitstellen der Kunststoffkarten;
- einer Einrichtung zum geordneten Bereitstellen der bedruckten Kartenträger, die mit einer Druckauftragsnummer bedruckt sind;
- einer ersten Erfassungseinrichtung, die die Identifikationsmarkierung der Kunststoffkarten erfaßt;
- einer zweiten Erfassungseinrichtung, die die Druckauftragsnummer eines Kartenträgers erfaßt;
- einer Verarbeitungseinrichtung, die Datensätze mit Identifikationsmarkierungen enthält, wobei jedem Datensatz eine Druckauftragsnummer zugeordnet ist, wobei die Verarbeitungseinrichtung anhand des Datensatzes bestimmt, ob die zur Verbindung anstehende Kunststoffkarte mit dem Kartenträger zusammenpaßt; und
- eine Zusammenführ- und Verbindungseinrichtung, die die Kunststoffkarte und den Kartenträger zusammenführt und verbindet, wenn dieselben zusammenpassen.

Die vorliegende Erfindung schafft eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit
- einer Einrichtung zum geordneten Bereitstellen der Kunststoffkarten;
- einer Einrichtung zum geordneten Bereitstellen der bedruckten Kartenträger, die mit einer Druckauftragsnummer bedruckt sind;
- einer ersten Erfassungseinrichtung, die die Identifikationsmarkierung einer Kunststoffkarte erfaßt;
- einer zweiten Erfassungseinrichtung, die die Druckauftragsnummer eines Kartenträgers erfaßt;
- einer Verarbeitungseinrichtung, die Datensätze mit Identifikationsmarkierungen enthält, wobei jedem Datensatz eine Druckauftragsnummer zugeordnet ist, wobei die Verarbeitungseinrichtung anhand des Datensatzes der Kunststoffkarte, deren Identifikationsmarkierung erfaßt wurde, eine Druckauftragsnummer zuordnet, und bestimmt, ob die Druckauftragsnummern der Kunststoffkarte und des Kartenträgers zusammenpassen; und
- einer Zusammenführ- und Verbindungseinrichtung, die die Kunststoffkarte und den Kartenträger zusammenführt und verbindet, wenn dieselben zusammenpassen.

Die vorliegende Erfindung schafft eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit
einer Einrichtung zum Erzeugen eines Datensatzes, die folgende Merkmale aufweist:
   - eine Trägereinrichtung, in der die Kunststoffkarte enthalten ist;
   - einer Erfassungseinrichtung, die die Identifikationsmarkierung erfaßt;
   - eine Datenbankeinrichtung, die Daten in Abhängigkeit von der Identifikationsmarkierung enthält; und
   - eine Verarbeitungseinrichtung, die einen Zugriff auf die Datenbank mittels der Identifikationsmarkierung bewirkt und durch Auslesen der Datenbank und durch Zuordnen einer Druckauftragsnummer zu den ausgelesenen Daten einen Datensatz erzeugt; und
einer Einrichtung zum Zusammenführen und Verbinden, die folgende Merkmale aufweist:
   - eine Kunststoffkartenhalteeinrichtung, in der die Kunststoffkarte enthalten ist;
   - eine Kartenträgerhalteeinrichtung, in der ein bedruckter Kartenträger enthalten ist, der eine Druckauftragsnummer aufweist;
   - eine Einrichtung zum Erfassen der Druckauftragsnummer auf dem bedruckten Kartenträger;
   - eine Einrichtung zum Erfassen der Identifikationsmarkierung der Kunststoffkarte;
   - eine Verarbeitungseinrichtung, die anhand des durch die erfaßte Identifikationsmarkierung festgelegten Datensatzes bestimmt, ob die in dem festgelegten Datensatz enthaltene Druckauftragsnummer mit der Druckauftragsnummer des bedruckten Kartenträgers übereinstimmt; und
   - eine Einrichtung, die die Kunststoffkarte und den bedruckten Kartenträger zusammenführt und verbindet, wenn die Druckauftragsnummern übereinstimmen.

Bevorzugte Weiterbildungen der vorliegenden Erfindung sind in den Unteransprüchen definiert.

Nachfolgend werden unter Bezugnahme auf die beiliegenden Zeichnungen bevorzugte Ausführungsbeispiele der vorliegenden Erfindung näher beschrieben. Es zeigen:
- Fig. 1: ein Flußdiagramm, welches ein erstes bevorzugtes Ausführungsbeispiel des erfindungsgemäßen Verfahrens darstellt;
- Fig. 2: ein Flußdiagramm, welches das erfindungsgemäße Verfahren gemäß weiteren bevorzugten Ausführungsbeispielen darstellt;
- Fig. 3: ein erstes Ausführungsbeispiel der erfindungsgemäßen Vorrichtung; und
- Fig. 4: ein zweites Ausführungsbeispiel der erfindungsgemäßen Vorrichtung.

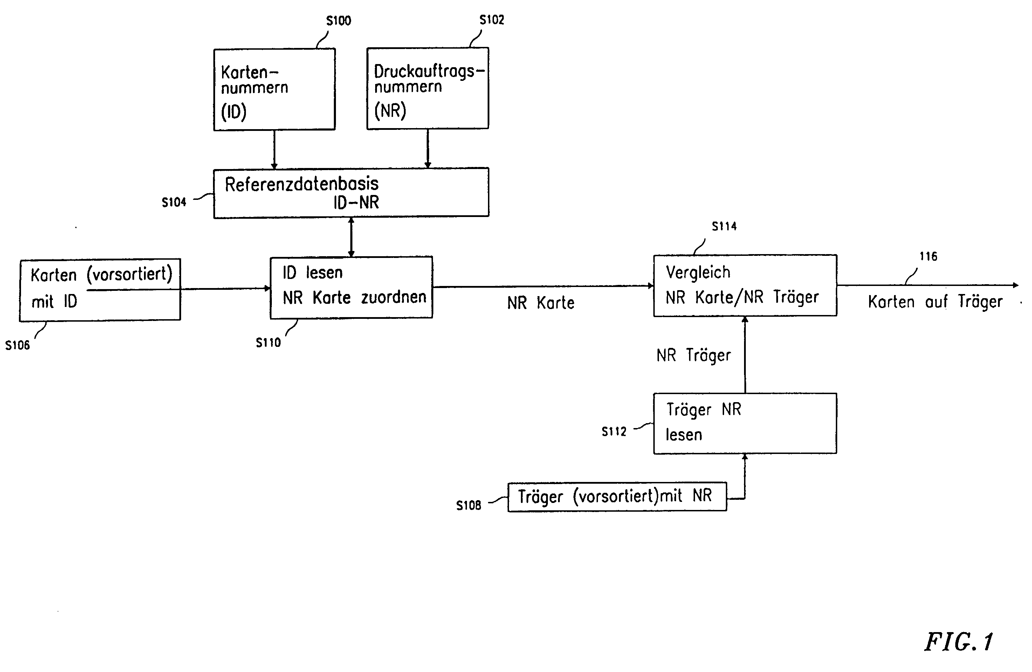

Bevor nachfolgend anhand der Fig. 1 ein erstes Ausführungsbeispiel näher beschrieben wird, wird zunächst das der vorliegenden Erfindung zugrunde liegende Konzept näher beschrieben.

Anstelle der Verwendung eines On-line-Systems zur Verbindung von Kunststoffkarten und Kartenträgern, wie es oben bereits beschrieben wurde, ermöglicht die vorliegende Erfindung einen Off-line-Betrieb, bei dem die Identifikationsmarkierungen der Kunststoffkarten, wie zum Beispiel die Kartennummern, nicht zur Bestimmung einer Übereinstimmung mit den Kartenträgern herangezogen werden. Hierdurch wird auch bei einem Off-line-System sichergestellt, daß keinerlei Mißbrauch der personenbezogenen Daten in einer Datenbank erfolgt, da anstelle der Identifikationsmarkierung der Kunststoffkarte nun eine Druckauftragsnummer verwendet wird, die nicht in eindeutiger Weise den personenbezogenen Daten zugeordnet ist.

Die in einem Zusammenführ- und Verbindungs-System von Kunststoffkarten und Kartenträgern zu verarbeitenden Kunststoffkarten, zum Beispiel Plastikkarten, werden von einem Benutzer personalisiert oder bereits personalisiert bezogen und in der Personalisierungsreihenfolge für die Verarbeitung in dem System bereitgehalten. Die Personalisierung besteht im allgemeinsten Fall aus einer Identifikationsmarkierung (ID), wie zum Beispiel einer Kartennummer, die einmalig ist und verschiedene Aussagen in sich trägt, wie zum Beispiel Aussagen betreffend den Kunden, Applikationen, Funktionen, Filialen, und ähnliches. Hierdurch wird ein Datensatz bzw. eine Datei der Identifikationsmarkierungen bzw. Kartennummern vorgegeben. Abstrakt gesehen, kann die Kartennummer auch durch einen Namen, eine alphanumerische Zeichenfolge oder andere Identifikationscodes ersetzt werden, solange die Merkmale eindeutig sind. Für den Druck der Kartenträger werden von einem Anwender oder von dessen Auftraggeber für den Druck von Kartenträgern Druckauftragsnummern (NR) zugeteilt. Die Grundlage der Druckreihenfolge ist hierbei die oben beschriebene Datei der Kartennummern. Es kann aber auch eine beliebige Folge der Druckauftragsnummern in Bezug zur Reihenfolge der Karten gewählt werden, notwendig ist hierbei allerdings für jede Off-line-Verarbeitung eine vorsortierte Reihenfolge der Kartenträger wie bei den Kunststoffkarten selbst.

Wesentlich ist aber auch generell, daß jede Druckauftragsnummer nur einmal in einem zu verarbeitenden Batch von Karten und Trägern auftaucht. Es können aber auch Druckauftragsnummern benutzt werden, die die komplette Produktion beim Anwender auflisten, wodurch der Anwender eine grundsätzliche Sicherheit hat, daß jede Druckauftragsnummer nur einmal verwendet wurde. Ferner eröffnet sich für den Anwender dadurch ein automatischer Überblick über sein Produktionsvolumen.

Die Identifikationsmarkierungen bzw. Kartennummern und die Druckauftragsnummer werden in einem Datensatz gegenseitig zugeordnet, und der Anwender stellt diesen Datensatz bzw. diese Datei bereit. Dieser Datensatz sei im folgenden als Referenzdatei ID-NR bezeichnet, und wird durch den Anwender dem Verfahren bzw. der Vorrichtung bereitgestellt. Die vorsortierten Plastikkarten werden dann zugeführt und eine Kartennummer der Karte wird gelesen. In der Referenzdatei ID-MR wird die Druckauftragsnummer zur Kartennummer bzw. Identifikationsmarkierung gesucht und der Karte zugeordnet. Vorsortierte Träger werden zugeführt und die Druckauftragsnummer jedes Trägers wird gelesen. Sowohl die Karte, wie auch der Träger werden in der Appliziererstation bereit gehalten und die Druckauftragsnummer des Trägers wird mit derjenigen der Karte verglichen. Bei einer Übereinstimmung der Druckauftragsnummern wird die Karte auf dem Träger befestigt und der Träger zur weiteren Verarbeitung weitergeführt.

In Fig. 1 ist ein erstes bevorzugtes Ausführungsbeispiel des erfindungsgemäßen Verfahrens näher dargestellt. Zunächst werden in einem Schritt S100 und einem Schritt S102 die Kartennummern und die Druckauftragsnummern bereitgestellt und die Referenzdatei wird in einem Schritt S104 erzeugt, die die Zuordnung von Identifikationsmarkierung zur Druckauftragsnummer enthält. Anstelle der oben beschriebenen Schritte kann die Referenzdatei auch extern erzeugt werden, und dem Verfahren bereitgestellt werden. In einem Schritt S106 werden vorsortierte Kunststoffkarten mit einer Identifikationsmarkierung bereitgestellt, und in einem Schritt S108 werden vorsortierte Kartenträger bereitgestellt, die mit einer Druckauftragsnummer bedruckt sind. Im Schritt S110 wird die Identifikationsmarkierung bzw. Kartennummer der zur Verbindung anstehenden Kunststoffkarte gelesen und durch einen Zugriff auf die Referenzdatei wird der Karte im Schritt S110 ferner eine Druckauftragsnummer zugeordnet. Im Schritt 112 wird die auf dem zur Verbindung anstehenden Kartenträger enthaltene Druckauftragsnummer gelesen und im Schritt S114 werden die Druckauftragsnummern der Kunststoffkarte und des Trägers verglichen. Falls die Druckauftragsnummern übereinstimmen werden die Kunststoffkarte und der Kartenträger miteinander verbunden und gegebenenfalls einer weiteren Verarbeitung zugeführt, wie dies durch den Pfeil 116 dargestellt ist.

Anstelle der oben beschriebenen Zuordnung einer Druckauftragsnummer zu der zur Verbindung anstehenden Karte im Schritt S110 kann bei einem weiteren Ausführungsbeispiel anstelle des anstehenden Vergleichs der Druckauftragsnummern im Schritt S114 bestimmt werden, ob die Kunststoffkarte und der Kartenträger zusammenpassen, was dadurch erfolgt, daß mittels der Identifikationsmarkierung auf den Datensatz zugegriffen wird, und bestimmt wird, ob die diesem Datensatz der Identifikationsmarkierung zugeordnete Druckauftragsnummer derjenigen entspricht, die auf dem Kartenträger aufgedruckt ist.

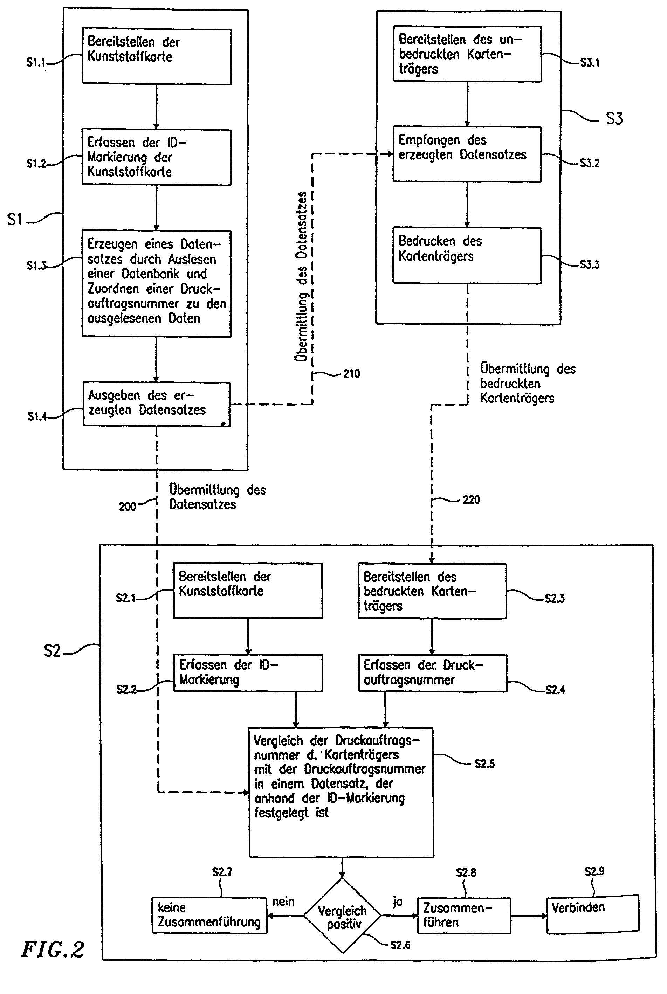

Anhand der Fig. 2 werden nachfolgend ein zweites und ein drittes Ausführungsbeispiel der vorliegen Erfindung näher beschrieben.

Das erfindungsgemäße Verfahren gemäß dem zweiten Ausführungsbeispiel umfaßt einen ersten Hauptschritt S1 zum Erzeugen eines Datensatzes und einen zweiten Hauptschritt S2 zum Zusammenführen und Verbinden einer Kunststoffkarte und eines Kartenträgers.

Im Hauptschritt S1 wird zunächst in einem ersten Schritt S1.1 eine Kunststoffkarte bereitgestellt. Im Schritt S1.2 wird eine auf der Kunststoffkarte enthaltene Identifikationsmarkierung erfaßt. Abhängig von der bereitgestellten Kunststoffkarte kann diese Identifikationsmarkierung zum Beispiel in einem Magnetstreifen oder in einem auf der Kunststoffkarte eingebetteten Chip enthalten sein. Das Auslesen der Identifikationsmarkierung erfolgt durch bekannte Mittel.

In einem nachfolgenden Schritt S1.3 wird ein Datensatz erzeugt. Zu diesem Zweck wird mittels der im Schritt S1.2 erfaßten Identifikationsmarkierung auf eine Datenbank zugegriffen, welche personenbezogene Daten des Inhabers der Kunststoffkarte in Abhängigkeit der Identifikationsmarkierung speichert. Über die Identifikationsmarkierung wird auf den entsprechenden Satz von Daten des Inhabers der Kunststoffkarte zugegriffen. Ferner wird den ausgelesenen Daten eine Druckauftragsnummer zugeordnet, so daß der in Schritt S1.3 erzeugte Datensatz neben den personenbezogenen Daten die zugeordnete Druckauftragsnummer enthält. Die Druckauftragsnummer ist den ausgelesenen, personenbezogenen Daten nicht in eindeutiger Weise zugeordnet, d. h. aus der Druckauftragsnummer lassen sich keinerlei Rückschlüsse und Verbindungen zu den personenbezogenen Daten der Datenbank herstellen. Die Druckauftragsnummer kann beispielsweise eine zufällig erzeugte Zahl oder Nummer sein oder es kann sich um eine zyklisch wiederholende Nummer handeln, deren Wiederholungsrate beispielsweise abhängig von der zu verarbeitenden Anzahl von Kunststoffkarten eingestellt werden kann. Solange die Druckauftragsnummer in nicht eindeutiger Weise den personenbezogenen Daten zugeordnet ist und auch keinerlei Rückschlüsse auf diese zuläßt, kann anstelle einer Nummer auch jede anders geartete Markierung als Druckauftragsmarkierung verwendet werden. In diesem Fall können beispielsweise Buchstaben oder Buchstabenkombinationen oder Buchstaben/Zahlen-Kombinationen oder graphische oder elektrische oder magnetische Zeichenkombinationen als Druckauftragsmarkierung verwendet werden.

In einem abschließenden Schritt S1.4 wird der im Schritt S1.3 erzeugte Datensatz ausgegeben.

Im zweiten Hauptschritt S2 wird zunächst in einem Schritt S2.1 eine Kunststoffkarte bereitgestellt und in einem Schritt S2.2 wird die Identifikationsmarkierung der im Schritt S2.1 bereitgestellten Kunststoffkarte auf ähnliche Weise wie im Schritt S1.2 im Hauptschritt S1 erfaßt. In einem Schritt S2.3 wird ein bedruckter Kartenträger bereitgestellt, welcher bereits die personenbezogenen Daten des Inhabers der Kunststoffkarte aufweist, um so beispielsweise die Zustellung einer neuen Kunststoffkarte an diesen Inhaber zu ermöglichen. Ferner ist der bedruckte Kartenträger bereits mit einer Druckauftragsnummer versehen, welche in einem Schritt S2.4 durch eine geeignete Leseeinrichtung erfaßt wird. Die Druckauftragsnummer kann auf dem Kartenträger in einer beliebigen Form vorliegen, solange sie von einer Leseeinrichtung im Schritt S2.4 erfaßt werden kann. Die Druckauftragsnummer kann beispielsweise als eine Zahlenkombination oder eine einzelne Zahl, als eine Buchstabenkombination oder in einem Strichcode o. ä. Codes vorliegen.

Hinsichtlich der Schritte S2.1 bis S2.4 wird darauf hingewiesen, daß die Schritte S2.1 und S2.2 sowie die Schritte S2.3 und S2.4 im wesentlich parallel zueinander ablaufen, und daß durch die obige Beschreibung nicht die Reihenfolge der Schritte in der beschriebenen Form als feststehend anzusehen ist.

Nach dem Erfassen der Identifikationsmarkierung und dem Erfassen der Druckauftragsnummer wird in einem Schritt S2.5 ein Vergleich durchgeführt. Hierbei wird bestimmt, ob die Druckauftragsnummer des Kartenträgers, welche im Schritt 2.4 erfaßt wurde, mit der Druckauftragsnummer in einem Datensatz, der anhand der ausgelesenen Identifikationsmarkierung festgelegt ist, übereinstimmt. Zu diesem Zweck ist es erforderlich, daß im Schritt S2.5 auf den durch den Hauptschritt S1 erzeugten Datensatz zugegriffen werden kann. Zu diesem Zweck kann der im Schritt S1.4 ausgelesenen Datensatz über eine geeignete Einrichtung 200 zur Verarbeitung im Schritt S2.5 bereitgestellt werden. Die Einrichtung 200 dient somit zur Übermittlung des im Hauptschritt S1 erzeugten Datensatzes an den Hauptschritt S2, wo er im Schritt S2.5 zur weiteren Verarbeitung benötigt wird. Die Art der Übermittlung des Datensatzes kann beispielsweise eine Datenfernübertragung über ein Netzwerk sein. Alternativ kann der im Schritt S1.4 ausgegebene Datensatz auf einen Datenträger, wie beispielsweise eine Diskette o. ä. aufgebracht werden, und mittels dieses Datenträgers wird der Datensatz dem Schritt S2.5 im Hauptschritt S2 bereitgestellt.

Nach dem Schritt S2.5 wird in einem Schritt S2.6 überprüft, ob der im Schritt S2.5 durchgeführte Vergleich positiv ist, d. h., ob die Druckauftragsnummern übereinstimmen. Wenn dies nicht der Fall ist, so erfolgt im Schritt S2.7 keine Zusammenführung der Kunststoffkarte und des bedruckten Kartenträgers, und die Kunststoffkarte und der Kartenträger werden auf geeignete Art und Weise vor der Zusammenführung entfernt. Wird im Schritt S2.6 bestimmt, daß der Vergleich positiv war, so erfolgt in den Schritten S2.8 und S2.9 die Zusammenführung und Verbindung der bereitgestellten Kunststoffkarte und des bereitgestellten bedruckten Kartenträgers.

Das oben beschriebene Verfahren zum Zusammenführen und Verbinden einer Kunststoffkarte und eines Kartenträgers weist somit die zwei beschriebenen Hauptschritte S1 und S2 auf, und stellt ein sogenanntes Off-Line-Verfahren dar, bei dem die Erzeugung eines Datensatzes sowie das Erzeugen eines bedruckten Kartenträgers nicht innerhalb eines geschlossenen Systems erfolgt, sondern beispielsweise die Erzeugung des Datensatzes gemäß dem Hauptschritt S1 erfolgt. Genauso erfolgt die Herstellung der bedruckten Kartenträger mittels eines geeigneten Systems, wie nachfolgend noch näher beschrieben wird, und das Zusammenführen und Verbinden von Karte und Träger erfolgt in einem weiteren unabhängigen System, welches gegenüber den oben beschriebenen bekannten Systemen dann den Vorteil aufweist, daß es technisch weniger aufwendig ist und somit weniger anfällig für Fehler ist und geringere Kosten verursacht. Beispielsweise ist es nicht erforderlich, einen Drucker zum Bedrucken der Kartenträger vorzusehen und ferner führt eine Fehlfunktion des Druckers auch nicht zu einem Fehler im Gesamtsystem, nachdem alle Komponenten voneinander getrennt sind.

Obwohl im Vorangegangenen lediglich das Verfahren bezüglich des Zusammenführens einer Kunststoffkarte mit einem Kartenträger beschrieben wurde, ist es offensichtlich, daß die vorliegende Erfindung nicht darauf beschränkt ist, und auch das Zusammenführen und Verbinden einer Mehrzahl von Kartenträgern mit einer Mehrzahl von Kunststoffkarten umfaßt. In einem solchen Fall ist es erforderlich, daß im Schritt S2.3 die Kartenträger in der Reihenfolge bereitgestellt werden, in der die Erfassung der Identifikationsmarkierung der Kunststoffkarte im Schritt S1.2 des Hauptschritts S1 erfolgt ist, um eine ordnungsgemäße Zusammenführung und Verbindung sicherzustellen.

Anhand der Fig. 2 wird nachfolgend das dritte bevorzugte Ausführungsbeispiel des erfindungsgemäßen Verfahrens näher beschrieben. Wie bereits das zweite Ausführungsbeispiel umfaßt das dritte Ausführungsbeispiel den ersten und den zweiten Hauptschritt S1 und S2, und auf eine erneute Beschreibung der Einzelschritte wird verzichtet. Zusätzlich erfaßt das Verfahren einen dritten Hauptschritt S3 zum Erzeugen von bedruckten Kartenträgern. In einem ersten Schritt S3.1 wird ein unbedruckter Kartenträger bereitgestellt. Im Schritt S3.2 wird der im Hauptschritt S1 erzeugte Datensatz über eine Übertragungseinrichtung 210 empfangen. Die Übertragungseinrichtung 210 kann, wie die Einrichtung 200 eine Datenfernübertragungsvorrichtung, wie z.B. ein Netzwerk oder ein Datenträger, sein. Im Schritt S3.3 wird der im Schritt S3.1 bereitgestellte Kartenträger mit den Daten aus dem im Schritt S3.2 empfangenen Datensatz sowie mit der Druckauftragsnummer, welche in dem Datensatz ebenfalls enthalten ist, bedruckt. Anschließend erfolgt eine Übermittlung des bedruckten Kartenträgers, wie es durch das Bezugszeichen 220 angedeutet ist, um diesen im Schritt S2.3 des Hauptschrittes S2 bereitzustellen.

Wie bereits oben anhand des zweiten Ausführungsbeispiels angemerkt wurde ist auch beim dritten Ausführungsbeispiel das Verfahren nicht auf Verbindung eines Kartenträgers mit einer Kunststoffkarte beschränkt, sondern vielmehr kann eine Mehrzahl von Kartenträgern mit einer Mehrzahl von Kunststoffkarten verbunden werden. In diesem Fall ist es bevorzugt, daß die im Hauptschritt S3 bereitgestellten Kartenträger in der Reihenfolge der Erfassung der Identifikationsmarkierungen der Kunststoffkarten im Schritt S1.2 im Hauptschritt S1 bedruckt werden. Diese Reihenfolge ergibt sich beispielsweise aus den übermittelten Datensätzen, so daß am Ende des Hauptschritts S3 die bedruckten Kartenträger in der Reihenfolge vorliegen, in der auch die Kunststoffkarten während der Erzeugung des Datensatzes vorgelegen haben. Somit wird sichergestellt, daß die Reihenfolge 3 der im Hauptschritt S2 im Schritt S2.1 und im Schritt S2.3 bereitgestellten Kunststoffkarten bzw. Kartenträger übereinstimmt. Anhand der Druckauftragsnummern der Kartenträger und der den Datensätzen zugeordneten Druckauftragsnummern kann dann überprüft werden, ob die zur Verbindung anstehenden Karten und Träger tatsächlich übereinstimmen.

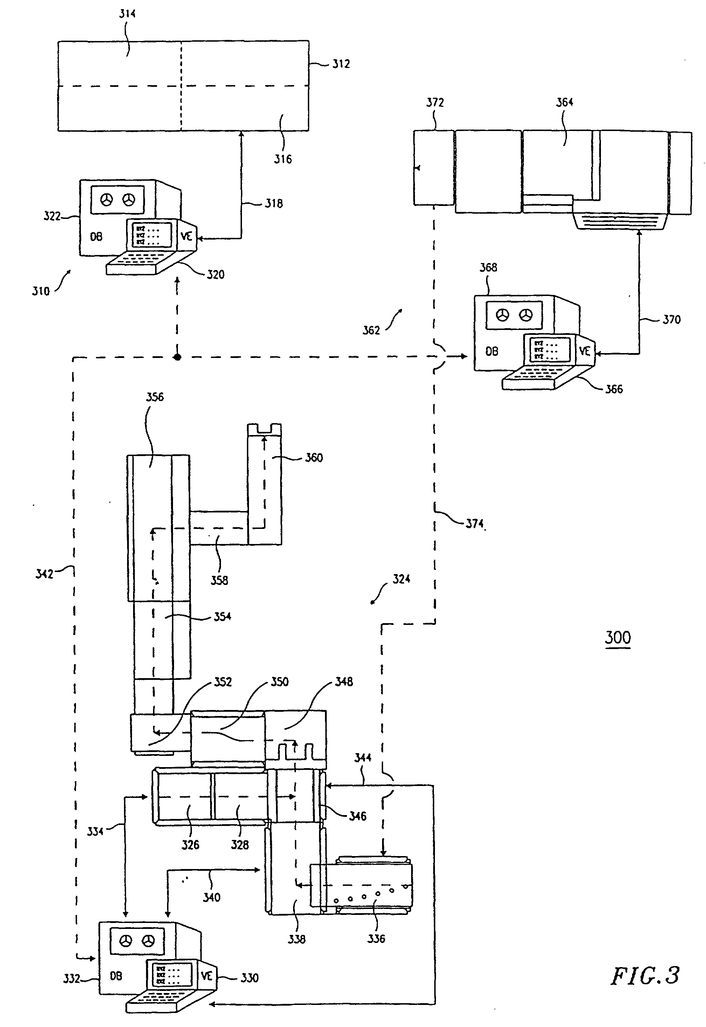

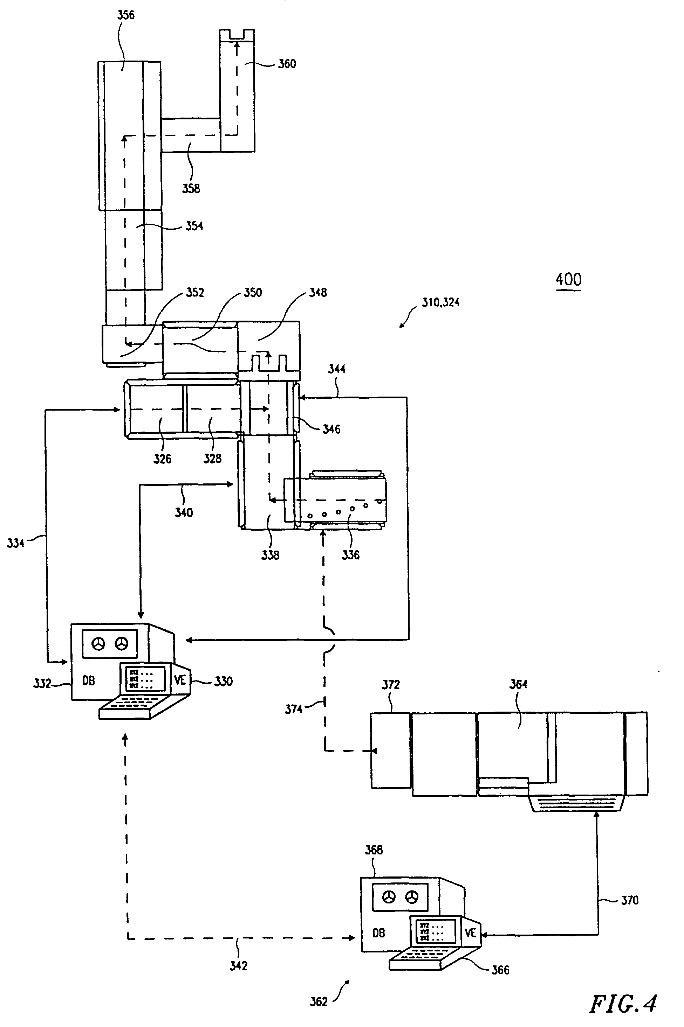

Nachfolgend werden anhand der Fig. 3 und 4 bevorzugte Ausführungsbeispiele der erfindungsgemäßen Vorrichtung näher beschrieben. In den Fig. 3 und 4 sind ähnliche oder gleiche Elemente und Bestandteile der Vorrichtung mit gleichen Bezugszeichen versehen.

Anhand der Fig. 3 erfolgt nachfolgend die Beschreibung eines ersten bevorzugten Ausführungsbeispiels der erfindungsgemäßen Vorrichtung. Wenn nachfolgend in Bezugnahme auf die Fig. 3 und 4 von einer Mehrzahl von Kunststoffkarten und von einer Mehrzahl von Kartenträgern gesprochen wird, so dient dies lediglich der Beschreibung der bevorzugten Ausführungsbeispiele. Die erfindungsgemäße Vorrichtung arbeitet auch für eine einzelne Karte und einen einzelnen Träger.

Die Vorrichtung gemäß dem Ausführungsbeispiel in der Fig. 3 ist in ihrer Gesamtheit mit dem Bezugszeichen 300 versehen und umfaßt eine erste Einrichtung 310 zum Erzeugen eines Datensatzes. Die Einrichtung 310 umfaßt eine erste Komponente 312, die eine Trägereinrichtung 314 und eine Erfassungseinrichtung 316 beinhaltet. In der Trägereinrichtung 314 sind die Kunststoffkarten enthalten und deren Identifikationsmarkierung wird mittels der Erfassungseinrichtung 316 gelesen. Abhängig davon auf welche Art und Weise die Identifikationsmarkierung auf der Kunststoffkarte enthalten ist, beispielsweise in einem Magnetstreifen oder einem Chip, wird eine geeignete Lesevorrichtung verwendet, um die Identifikationsmarkierung auszulesen.

Die Erfassungseinrichtung 316 steht über eine Datenleitung 318 mit einer Verarbeitungseinrichtung 320 in Verbindung, welche beispielsweise als Personal Computer oder Teil einer Großrechenanlage ausgeführt sein kann. Der Verarbeitungseinrichtung 320 ist eine Datenbank 322 zugeordnet, in der personenbezogene Daten bezüglich der Kunststoffkarten in der Trägereinrichtung 314 in Abhängigkeit von der Identifikationsmarkierung gespeichert sind. Die Verarbeitungseinrichtung 320 bewirkt mittels der erfaßten und über die Datenleitung 318 an diese übertragenen Identifikationsmarkierung einen Zugriff auf die Datenbank 322 und erzeugt einen Datensatz durch Auslesen der Datenbank und durch Zuordnen einer Druckauftragsnummer zu den ausgelesenen Daten. In der Einrichtung 310 werden die anhand der Fig. 2 im Hauptschritt S1 beschriebenen Einzelschritte durchgeführt.

Die Vorrichtung 300 umfaßt ferner einer Zusammenführ- und Verbindungseinrichtung 324. Die Einrichtung 324 umfaßt eine Kunststoffkartenhalteeinrichtung 326, die beispielsweise in der Form eines Kartenturms oder einer Revolvereinrichtung mit vier Magazinen ausgebildet sein kann. Aus dieser Haltevorrichtung 326 werden einzelne Karten einer Erfassungseinrichtung 328 zugeführt, die die auf der Kunststoffkarte enthaltene Identifikationsmarkierung ausliest. Die Erfassungseinrichtung 328 ist mit einer Verarbeitungseinrichtung 330 mit zugeordneter Datenbank 332 verbunden, wie es schematisch durch den Pfeil 334 dargestellt ist. Die Einrichtung 324 umfaßt ferner ein Aufnahmefach 336 zur Aufnahme von vorgedruckten Kartenträgern, an welches sich eine weitere Erfassungseinrichtung 338 anschließt, die die auf dem bedruckten Kartenträger enthaltene Druckauftragsnummer liest und mit der Verarbeitungseinrichtung 330 mit zugeordneter Datenbank 332 in Verbindung steht, wie es schematisch durch den Pfeil 340 dargestellt ist. Die Verarbeitungseinrichtung 330 empfängt von der Erfassungseinrichtung 328 über die Leitung 334 die Identifikationsmarkierung der zur Verbindung anstehenden Kunststoffkarte und bestimmt anhand des durch die erfaßte Identifikationsmarkierung festgelegten Datensatzes, ob die in dem festgelegten Datensatz enthaltene Druckauftragsnummer mit der Druckauftragsnummer des bedruckten Kartenträgers übereinstimmt, welche über die Leitung 340 von der Leseeinrichtung 338 erhalten wird. Zu diesem Zweck ist es erforderlich, daß der Verarbeitungseinrichtung 330 die durch die Einrichtung 310 erzeugten Datensätze zur Verfügung stehen. Aus diesem Grund stehen die Verarbeitungseinrichtung 320 der Einrichtung 310 und die Verarbeitungseinrichtung 330 der Einrichtung 324 über eine Datenleitung 342 in Verbindung, so daß die erzeugten Datensätze vor dem Zusammenführen von Karten und Trägern an die Zusammenführ- und Verbindungseinrichtung 324 weitergeleitet werden können. Die Leitung 342 kann beispielsweise eine Datenfernübertragungsleitung sein. Anstelle einer Datenleitung kann die Verbindung 342 auch so ausgestattet sein, daß die erzeugten Datensätze in der Verarbeitungseinrichtung 320 auf eine Datenträger aufgebracht werden, welcher dann mittels Kurier oder per Post an den Ort der Einrichtung 324 gebracht wird und dort in die Verarbeitungseinrichtung 330 eingebracht wird, um die aufgezeichneten Datensätze in dieser abzulegen. Die Verarbeitungseinrichtung 330 der Einrichtung 324 steht über eine Datenleitung 344 mit einer Appliziereinrichtung 346 in Verbindung. Stimmen die Druckauftragsnummern der zur Verbindung anstehenden Karten und Träger überein, so wird über die Leitung 344 an die Applizierereinrichtung 346 ein Signal ausgegeben, was dazu führt, daß der Kartenträger und die Kunststoffkarte zusammengeführt und verbunden werden.

Bei dem in Fig. 3 dargestellten Ausführungsbeispiel können sich noch weitere Verarbeitungsschritte der nunmehr verbundenen Kunststoffkarte mit dem Träger anschließen. An den Applizierer 346 schließt sich eine Umlenkeinrichtung 348 an, die den von der Applizierereinrichtung 346 ausgegebenen Kartenträger mit Kunststoffkarte empfängt. Die Einrichtung 348 übergibt den Kartenträger mit Kunststoffkarte an eine Längsfalzeinrichtung 350, die diesen ihrerseits einer Sammelstation 352 zuführt. Über eine Zusammentragbahn 354 gelangt der Kartenträger mit Kunststoffkarte zu einer Verpackungs- und Verschließeinrichtung 356. Aus dieser wird der Kartenträger mit Kunststoffkarte mittels einer Ausfahreinrichtung 358 entfernt und in einem Schuppenband 360 geschuppt abgelegt.

Bei einem weiteren bevorzugten Ausführungsbeispiel der erfindungsgemäßen Vorrichtung umfaßt die Vorrichtung 300 zusätzlich eine Druckereinrichtung 362, die einen Drucker 364 sowie eine Verarbeitungseinrichtung 366 mit zugeordneter Datenbank 368 umfaßt. Der Drucker 364 ist über eine Datenleitung 370 mit der Verarbeitungseinrichtung 366 verbunden. Über eine Datenübertragungsleitung 342 oder mittels eines Datenträgers wird in die Verarbeitungseinrichtung 366 der in der Einrichtung 310 erzeugte Datensatz bzw. die Mehrzahl von Datensätzen eingegeben. Der Drucker 364 bedruckt die unbedruckten Kartenträger mit den im Datensatz enthaltenen Daten sowie mit der im Datensatz enthaltenen Druckauftragsnummer und legt diese bedruckten Kartenträger in einem Ausgabefach 372 des Druckers 364 ab. Sobald sämtliche unbedruckten Kartenträger bedruckt sind und im Ausgabefach 372 abgelegt sind, werden diese von dem Ausgabefach 372 im Drucker 364 zu der Zusammenführ- und Verbindungseinrichtung 324, genauer gesagt in das Ablagefach 336 dieser Einrichtung verbracht, wie das durch die gestrichelte Linie 374 angedeutet ist. Anstelle der oben beschriebenen Druckereinrichtung 362 kann diese auch in der Form von Rotationsdruckanlagen und anderen Großdruckeinrichtungen ausgebildet sein, wobei die spezielle Ausgestaltung der Druckeinrichtung von der Anzahl der zu verarbeiteten Kartenträgern und der Art der Bedruckung abhängt.

Wie oben bereits ausgeführt wurde, dient das System 300 auch dazu eine Mehrzahl von Kunststoffkarten und Kartenträgern zusammenzuführen und zu verbinden. In diesem Fall werden die Kartenträger in der Reihenfolge der Erfassung der Identifikationsmarkierung der Kunststoffkarte in der Leseeinrichtung 316 der Datenerzeugungseinrichtung 310 bedruckt und werden in dieser Reihenfolge in der Kartenträgerhalteeinrichtung bzw. in dem Ablagefach 336 abgelegt, so daß die Reihenfolge der Kunststoffkarten und die Reihenfolge der Kartenträger entsprechend den Druckauftragsnummern und den personenbezogenen Daten übereinstimmt, und anhand der Überprüfung der Übereinstimmung der Druckauftragsnummern vor der Verbindung nochmals sichergestellt wird, daß diese Kartenträger und Kunststoffkarten auch tatsächlich zusammengehören.

Anhand der Fig. 4 ist ein weiteres bevorzugtes Ausführungsbeispiel der vorliegenden Erfindung näher dargestellt. Wie der Fig. 4 zu entnehmen ist, umfaßt die Vorrichtung 400 im wesentlichen die gleichen Elemente, die bereits anhand der Fig. 3 beschrieben wurden. Auf eine erneute Beschreibung dieser Komponenten wird daher verzichtet. Der Unterschied zwischen dem Ausführungsbeispiel, welches anhand der Fig. 3 beschrieben wurde und dem in Fig. 4 dargestellten Ausführungsbeispiel der Vorrichtung besteht darin, daß anstelle einer getrennten Vorrichtung zum Erzeugen eines Datensatzes, wie es in Fig. 3 mit dem Bezugszeichen 310 bezeichnet ist, bei dem System 400 die Verarbeitungseinrichtung 330 mit zugeordneter Datenbank 332 sowie die Kunststoffkartenhalteeinrichtung 326 und die Lesevorrichtung 328 zunächst dazu verwendet werden, um auf die oben beschriebene Art und Weise Datensätze mit zugeordneter Druckauftragsnummer bezüglich der einzelnen Kunststoffkarten zu erzeugen. Auf die anhand der Fig. 3 bereits beschriebene Art werden diese an die Druckereinrichtung 362 übergeben, die unbedruckte Kartenträger mit den Daten und der Druckauftragsnummer bedruckt. Zum Zusammenführen und Verbinden werden die Kunststoffkarten erneut in die Halteeinrichtung 326 eingebracht und die bedruckten Kartenträger werden in die Aufnahme 336 eingebracht und die Verbindung erfolgt auf die oben beschriebene Art.

Bezüglich der in Fig. 3 und 4 dargestellten Ausführungsbeispiele der erfindungsgemäßen Vorrichtung wird darauf hingewiesen, daß für den Fall der Ausführung des Verfahrens, das anhand der Fig. 1 beschrieben wurde, nicht die in Fig. 3 und 4 dargestellten Komponenten vollständig vorhanden sein müssen. Tatsächlich ist es für die Ausführung des Verfahrens, welches anhand der Fig. 1 beschrieben wurde, ausreichend, lediglich die Zusammenführ- und Verbindungseinrichtung 324 zu verwenden, welche in ihrer Verarbeitungseinrichtung 330 mit zugeordneter Datenbank 332 die Referenzdatei ID-MR enthält, und der im Kartenturm 326 und in dem Ablagefach 336 die Kunststoffkarten bzw. die bedruckten Kartenträger in vorsortierter Reihenfolge bereitgestellt werden. Über die Leseeinrichtungen 328 und 338 erfolgt dann das Auslesen des Identifikationsmarkierung der Kunststoffkarte bzw. der Druckauftragsnummer des zur Verbindung anstehenden Kartenträgers und über die Verarbeitungseinrichtung 330 wird bestimmt, ob die zur Verbindung anstehende Kunststoffkarte mit dem Kartenträger zusammenpaßt, wobei dies entweder anhand einer zu der Kunststoffkarte mittels der Verarbeitungseinrichtung 330 und der Referenzdatei zugeordneten Druckauftragsnummer erfolgt, oder anhand der Datensätze in der Referenzdatei bestimmt wird, auf welche lediglich mit der Identifikationsmarkierung zugegriffen wird.

Anders als bei den oben beschriebenen Ausführungsbeispielen kann bei einem weiteren Ausführungsbeispiel ein Benutzer die Datensätze mit den Identifikationsnummern, den persönlichen Daten und den Druckauftragsnummern bereitstellen und über geeignete Datenträger sowohl zur Erzeugung der personalisierten Kartenträger als auch zur Erzeugung der personalisierten Kunststoffkarten an Dritte weitergeben. Nach Erhalt der personalisierten Kartenträger und der Kunststoffkarten können diese dann unter Verwendung des erfindungsgemäßen Verfahrens entweder durch den Benutzer oder durch einen weiteren Dritten zusammengeführt und verbunden werden.

Eine solche Situation kann sich z.B. bei Krankenkassen oder Geldinstituten einstellen, die keine Möglichkeiten zum Zusammenführen und Verbinden von Kartenträgern (z.B. Anschreiben) und Kunststoffkarten (z.B. Versicherungskarten oder Kreditkarten) haben. Diese Unternehmen haben die erforderlichen Daten (z.B. Karteninhaber) in einer Datenbank gespeichert und erstellen anhand dieser Datenbank die Datensätze und ordnen diesen zusätzlich die Identifikationsmarkierungen (soweit nicht schon ein Teil des Datensatzes) und die Druckauftragsnummern zu. Die so erstellten Datensätze werden dann von dem Geldinstitut oder der Krankenkasse z.B an eine Druckerei gegeben, die die personalisierten Kartenträger erstellt. Die Datensätze werden gleichzeitig an einen Kunststoffkartenhersteller weitergegeben, der die personalisierten Kunststoffkarten herstellt. Die so hergestellten Träger und Karten werden dann an einen weiteren Betrieb gegeben, der die Träger und die Karten verbindet und auch die übrigen erforderlichen Bearbeitungen, z.B. Kuvertieren und Versenden, übernehmen kann. Anstelle von drei unterschiedlichen Stellen, können selbstverständlich einzelne oder alle oben beschriebenen Schritte (Herstellen der personalisierten Träger, Herstellen der personalisierten Karten, Zusammenführen und Verbinden) von einem einzelnen Anbieter durchgeführt werden. Auch in einem solchen Fall stellt z.B. die Bank nur die Datensätze zur Verfügung.

## Patentansprüche

1. Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, wobei Datensätze mit den Identifikationsmarkierungen (ID), die den Kunststoffkarten zugeordnet sind, und mit zu jeder Identifikationsmarkierung zugeordneter Druckauftragsnummer (NR) vorgesehen sind, gekennzeichnet durch folgende Schritte:
- Geordnetes Bereitstellen der Kunststoffkarten (S106);
- Geordnetes Bereitstellen der bedruckten Kartenträger, die jeweils mit einer Druckauftragsnummer (NR) bedruckt sind (S108);
- Erfassen der Identifikationsmarkierung (ID) einer Kunststoffkarte (S110);
- Erfassen der Druckauftragsnummer (NR) eines Kartenträgers (S112);
- anhand des Datensatzes Bestimmen, ob die zur Verbindung anstehende Kunststoffkarte und der Kartenträger zusammenpassen (S114); und
- falls die Kunststoffkarte und der Kartenträger zusammenpassen, Zusammenführen und Verbinden derselben (S116).

2. Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch folgende Schritte:
- Bereitstellen von Datensätzen mit Identifikationsmarkierungen (ID), die den Kunststoffkarten zugeordnet sind;
- Zuordnen einer Druckauftragsnummer (NR) zu jedem Datensatz;
- Geordnetes Bereitstellen der Kunststoffkarten (S106);
- Geordnetes Bereitstellen der bedruckten Kartenträger, die jeweils mit einer Druckauftragsnummer (NR) bedruckt sind (S108);
- Erfassen der Identifikationsmarkierung (ID) einer Kunststoffkarte (S110);
- Erfassen der Druckauftragsnummer (NR) eines Kartenträgers (S112);
- anhand des Datensatzes Bestimmen, ob die zur Verbindung anstehende Kunststoffkarte und der Kartenträger zusammenpassen (S114); und
- falls die Kunststoffkarte und der Kartenträger zusammenpassen, Zusammenführen und Verbinden derselben (S116).

3. Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch folgende Schritte:
- Bereitstellen von Datensätzen mit Identifikationsmarkierungen (ID), die den Kunststoffkarten zugeordnet sind;
- Zuordnen einer Druckauftragsnummer (NR) zu jedem Datensatz;
- Geordnetes Bereitstellen der Kunststoffkarten (S106);
- Geordnetes Bereitstellen der bedruckten Kartenträger, die bereits mit einer Druckauftragsnummer (NR) bedruckt sind (S108);
- Erfassen der Identifikationsmarkierung (ID) einer Kunststoffkarte (S110);
- anhand des Datensatzes, Zuordnen der Druckauftragsnummer (NR) zu der Kunststoffkarte, deren Identifikationsmarkierung (ID) erfaßt wurde;
- Erfassen der Druckauftragsnummer (NR) eines Kartenträgers (S112);
- anhand der Druckauftragsnummer (NR), Bestimmen, ob die zur Verbindung anstehende Kunststoffkarte und der Kartenträger zusammenpassen (S114); und
- falls die Kunststoffkarte und der Kartenträger zusammenpassen, Zusammenführen und Verbinden derselben (S116).

4. Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch
a) einen Datensatzerzeugungsschritt (S1), der folgende Schritte aufweist:
a1) Bereitstellen der Kunststoffkarte (S1.1);
a2) Erfassen einer Identifikationsmarkierung (ID) der Kunststoffkarte (S1.2); und
a3) Erzeugen eines Datensatzes durch Auslesen einer Datenbank (322) mittels der Identifikationsmarkierung (ID) und Zuordnen einer Druckauftragsnummer (NR) zu den aus der Datenbank ausgelesenen Daten, wobei die Druckauftragsnummer nicht in eindeutiger Weise den ausgelesenen, personenbezogenen Daten zugeordnet ist (S1.3); und
b) einem Zusammenführungs-Verbindungsschritt (S2), der folgende Schritte aufweist:
b1) Bereitstellen eines bedruckten Kartenträgers, der eine Druckauftragsnummer (NR) aufweist (S2.3);
b2) Bereitstellen der Kunststoffkarte (S2.1);
b3) Erfassen der Druckauftragsnummer des bedruckten Kartenträgers (S2.4);
b4) Erfassen der Identifikationsmarkierung (ID) der Kunststoffkarte (S2.2);
b5) Bestimmen, anhand des durch die Identifikationsmarkierung (ID) festgelegten Datensatzes, ob die im festgelegten Datensatz enthaltene Druckauftragsnummer mit der erfaßten Druckauftragsnummer (NR) des bedruckten Kartenträgers übereinstimmt (S2.5); und
b6) falls die Druckauftragsnummern (NR) übereinstimmen, Zusammenführen und Verbinden von Kunststoffkarte und Kartenträger (S2.8, S2.9).

5. Verfahren nach Anspruch 4, gekennzeichnet durch folgende Schritte vor dem Schritt b)
- Bereitstellen eines unbedruckten Kartenträgers (S3.1); und
- Bedrucken des Kartenträgers mit Daten aus dem erzeugten Datensatz und der zugeordneten Druckauftragsnummer (S3.3).

6. Verfahren nach Anspruch 4 oder 5, dadurch gekennzeichnet,
daß eine Mehrzahl von Kunststoffkarten und Kartenträgern zusammengeführt und verbunden werden, wobei die Kartenträger in der Reihenfolge der Erfassung der Identifikationsmarkierungen (ID) der Kunststoffkarten erzeugt und bereitgestellt werden.

7. Verfahren nach einem der Ansprüche 4 bis 6, dadurch gekennzeichnet,
daß die Druckauftragsnummer (NR) eine sich zyklisch wiederholende Nummer ist.

8. Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch
- eine Einrichtung (326) zum geordneten Bereitstellen der Kunststoffkarten;
- eine Einrichtung (336) zum geordneten Bereitstellen der bedruckten Kartenträger, die mit einer Druckauftragsnummer (NR) bedruckt sind;
- einer ersten Erfassungseinrichtung (328), die die Identifikationsmarkierung (ID) einer Kunststoffkarte erfaßt;
- eine zweite Erfassungseinrichtung (338), die die Druckauftragsnummer (NR) eines Kartenträgers erfaßt;
- eine Verarbeitungseinrichtung (330, 332), die Datensätze mit Identifikationsmarkierungen (ID) enthält, wobei jedem Datensatz eine Druckauftragsnummer (NR) zugeordnet ist, wobei die Verarbeitungseinrichtung (330, 332) anhand des Datensatzes bestimmt, ob die zur Verbindung anstehende Kunststoffkarte mit dem Kartenträger zusammenpaßt; und
- eine Zusammenführ- und Verbindungseinrichtung (346), die die Kunststoffkarte und den Kartenträger zusammenführt und verbindet, wenn dieselben zusammenpassen.

9. Vorrichtung zum Zusammenführen und Verbinden von Kunststoffkarten, die mit einer Identifikationsmarkierung versehen sind, und bedruckten Kartenträgern die den jeweiligen Kunststoffkarten zugeordnet sind, gekennzeichnet durch
- eine Einrichtung (326) zum geordneten Bereitstellen der Kunststoffkarten;
- eine Einrichtung (336) zum geordneten Bereitstellen der bedruckten Kartenträger, die mit einer Druckauftragsnummer (NR) bedruckt sind;
- einer ersten Erfassungseinrichtung (328), die die Identifikationsmarkierung (ID) einer Kunststoffkarte erfaßt;
- eine zweiten Erfassungseinrichtung (338), die die Druckauftragsnummer (NR) eines Kartenträgers erfaßt;
- eine Verarbeitungseinrichtung (330, 332), die Datensätze mit Identifikationsmarkierungen (ID) enthält, wobei jedem Datensatz eine Druckauftragsnummer (NR) zugeordnet ist, wobei die Verarbeitungseinrichtung (330, 332) anhand des Datensatzes der Kunststoffkarte, deren Identifikationsmarkierung (ID) erfaßt wurde, eine Druckauftragsnummer (NR) zuordnet, und bestimmt, ob die Druckauftragsnummern (NR) der Kunststoffkarte und des Kartenträgers zusammenpassen; und
- eine Zusammenführ- und Verbindungseinrichtung (346), die die Kunststoffkarte und den Kartenträger zusammenführt und verbindet, wenn dieselben zusammenpassen.

10. Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch
eine Einrichtung zum Erzeugen eines Datensatzes (310 ) die folgende Merkmale aufweist:
- eine Trägereinrichtung (314; 326), in der die Kunststoffkarte enthalten ist;
- eine Erfassungseinrichtung (312; 328), die eine Identifikationsmarkierung (ID) der Kunststoffkarte erfaßt;
- eine Datenbankeinrichtung (322; 332), die Daten in Abhängigkeit von der Identifikationsmarkierung enthält; und
- eine Verarbeitungseinrichtung (320; 330), die einen Zugriff auf die Datenbank (322; 332) mittels der Identifikationsmarkierung (ID) bewirkt und durch Auslesen der Datenbank (322; 332) und durch Zuordnen einer Druckauftragsnummer (NR) zu den ausgelesenen Daten einen Datensatz erzeugt;
eine Einrichtung zum Zusammenführen und Verbinden (324), die folgende Merkmale aufweist:
- eine Kunststoffkartenhalteeinrichtung (326), in der die Kunststoffkarte enthalten ist;
- eine Kartenträgerhalteeinrichtung (336), in der ein bedruckter Kartenträger enthalten ist, der eine Druckauftragsnummer aufweist;
- eine Einrichtung (338) zum Erfassen der Druckauftragsnummer (NR) auf dem bedruckten Kartenträger;
- eine Einrichtung (328) zum Erfassen der Identifikationsmarkierung (ID) der Kunststoffkarte;
- eine Verarbeitungseinrichtung (330), die anhand des durch die erfaßte Identifikationsmarkierung (ID) festgelegten Datensatzes bestimmt, ob die in dem festgelegten Datensatz enthaltene Druckauftragsnummer (NR) mit der Druckauftragsnummer (NR) des bedruckten Kartenträgers übereinstimmt; und
- eine Einrichtung (346), die die Kunststoffkarte und den bedruckten Kartenträger zusammenführt und verbindet, wenn die Druckauftragsnummern (NR) übereinstimmen.

11. Vorrichtung nach Anspruch 10, gekennzeichnet durch
eine Druckereinrichtung (362), die folgende Merkmale aufweist:
- eine Einrichtung, die einen unbedruckten Kartenträger enthält;
- eine Einrichtung (364), die einen unbedruckten Kartenträger mit Daten aus dem erzeugten Datensatz und der zugeordneten Druckauftragsnummer bedruckt.

12. Vorrichtung nach Anspruch 10 oder 11, dadurch gekennzeichnet
daß eine Mehrzahl von Kunststoffkarten und Kartenträgern zusammengeführt und verbunden werden, wobei die Kartenträger in der Reihenfolge der Erfassung der Identifikationsmarkierungen (ID) der Kunststoffkarten bedruckt werden und in der Kartenträgerhalteeinrichtung (336) enthalten sind.

13. Vorrichtung nach einem der Ansprüche 10 bis 12, dadurch gekennzeichnet,
daß die Druckauftragsnummer (NR) eine sich zyklisch wiederholende Nummer ist.

## Claims

1. A method of bringing together and joining plastic cards, which are provided with an identification mark, and printed card carriers associated with the respective plastic cards, data sets with the identification marks (ID), which are associated with the plastic cards, and with a print job number (NR) associated with each identification mark being provided, characterized by the following steps:
- providing in order the plastic cards (S106);
- providing in order the printed card carriers which are each provided with a print job number (NR) (S108);
- detecting the identification mark (ID) of a plastic card (S110);
- detecting the print job number (NR) of a card carrier (S112);
- determining on the basis of the data set whether the plastic card which is about to be joined and the card carrier (S114) match one another; and
- if said plastic card and the card carrier match one another, bringing them together and joining them (S116).

2. A method of bringing together and joining plastic cards, which are provided with an identification mark, and printed card carriers associated with the respective plastic cards, characterized by the following steps:
- providing data sets with identification marks (ID) which are associated with the plastic cards;
- associating a print job number (NR) with each data set;
- providing in order the plastic cards (S106);
- providing in order the printed card carriers which are each provided with a print job number (NR) (S108);
- detecting the identification mark (ID) of a plastic card (S110);
- detecting the print job number (NR) of a card carrier (S112);
- determining on the basis of the data set whether the plastic card which is about to be joined and the card carrier (S114) match one another; and
- if said plastic card and the card carrier match one another, bringing them together and joining them (S116).

3. A method of bringing together and joining plastic cards, which are provided with an identification mark, and printed card carriers associated with the respective plastic cards, characterized by the following steps:
- providing data sets with identification marks (ID) which are associated with the plastic cards;
- associating a print job number (NR) with each data set;
- providing in order the plastic cards (S106);
- providing in order the printed card carriers which have already printed thereon a print job number (NR) (S108);
- detecting the identification mark (ID) of a plastic card (S110);
- associating, on the basis of the data set, the print job number (NR) with the plastic card whose identification mark (ID) has been detected;
- detecting the print job number (NR) of a card carrier (S112);
- determining, on the basis of the print job number (NR), whether the plastic card which is about to be joined and the card carrier (S114) match one another; and
- if said plastic card and the card carrier match one another, bringing them together and joining them (S116).

4. A method of bringing together and joining plastic cards, which are provided with an identification mark, and printed card carriers associated with the respective plastic cards, characterized by the following steps:
a) a data set production step (S1) comprising the following steps:
a1) providing the plastic card (S1.1);
a2) detecting an identification mark (ID) of the plastic card (S1.2); and
a3) producing a data set by reading a data base (322) by means of the identification mark (ID) and associating a print job number (NR) with the data read from the data base, said print job number being not unequivocally associated with the read data related to a specific person (S1.3); and
b) a bringing-together and joining step (S2) comprising the following steps:
b1) providing a printed card carrier which is provided with a print job number (NR) (S2.3);
b2) providing the plastic card (S2.1);
b3) detecting the print job number of the printed card carrier (S2.4);
b4) detecting the identification mark (ID) of the plastic card (S2.2);
b5) determining, on the basis of the data set specified by the identification mark (ID), whether the print job number contained in the specified data set corresponds to the detected print job number (NR) of the printed card carrier (S2.5); and
b6) if the print job numbers (NR) correspond, bringing the plastic card and the card carrier together and joining them (S2.8, S2.9).

5. A method according to claim 4, characterized by the following steps carried out prior to step b):
- providing a non-printed card carrier (S3.1); and
- printing data from the data set produced and the associated print job number on the card carrier (S3.3).

6. A method according to claim 4 or 5, characterized in
that a plurality of plastic cards and card carriers is brought together and joined, the card carriers being produced and provided in the sequence in which the identification marks (ID) of the plastic cards are detected.

7. A method according to one of the claims 4 to 6, characterized in
that the print job number (NR) is a cyclically recurring number.

8. An apparatus for bringing together and joining plastic cards, which are provided with an identification mark, and printed card carriers associated with the respective plastic cards, characterized by:
- a means (326) for providing in order the plastic cards;
- a means (336) for providing in order the printed card carriers having a print job number (NR) printed thereon;
- a first detection means (328) detecting the identification mark (ID) of a plastic card;
- a second detection means (338) detecting the print job number (NR) of a card carrier;
- a processing unit (330, 332) containing data sets with identification marks (ID), a print job number (NR) being associated with each data set, and the processing unit (330, 332) determining on the basis of said data set whether the plastic card which is about to be joined and the card carrier match one another; and
- a bringing-together and joining means (346) which brings the plastic card and the card carrier together and joins them if said plastic card and said card carrier match one another.

9. An apparatus for bringing together and joining plastic cards, which are provided with an identification mark, and printed card carriers associated with the respective plastic cards, characterized by:
- a means (326) for providing in order the plastic cards;
- a means (336) for providing in order the printed card carriers having a print job number (NR) printed thereon;
- a first detection means (328) detecting the identification mark (ID) of a plastic card;
- a second detection means (338) detecting the print job number (NR) of a card carrier;
- a processing unit (330, 332) containing data sets with identification marks (ID), a print job number (NR) being associated with each data set, and the processing unit (330, 332) associating a print job number (NR) on the basis of the data set of the plastic card whose identification mark (ID) has been detected and determining whether the print job numbers (NR) of the plastic card and of the card carrier match one another; and
- a bringing-together and joining means (346) which brings the plastic card and the card carrier together and joins them if said plastic card and said card carrier match one another.

10. An apparatus for bringing together and joining plastic cards, which are provided with an identification mark, and printed card carriers associated with the respective plastic cards, characterized by:
a means for producing a data set (310) having the following features:
- a carrier means (314; 326) in which the plastic card is contained;
- a detection means (312; 328) which detects the identification mark (ID) of the plastic card;
- a data base means (322; 332) containing data in dependence upon the identification mark; and
- a processing unit (320; 330) causing the data base (322; 332) to be accessed by means of the identification mark (ID) and producing a data set by reading the data base (322; 332) and by associating a print job number (NR) with the data read;
a bringing-together and joining means (324) having the following features:
- a plastic card holder (326) in which the plastic card is contained;
- a card carrier holder (336) in which a printed card carrier is contained, said printed card carrier being provided with a print job number;
- a means (338) for detecting the print job number (NR) on the printed card carrier;
- a means (328) for detecting the identification mark (ID) of the plastic card;
- a processing unit (330) determining, on the basis of the data set specified by the detected identification mark (ID), whether the print job number (NR) contained in the specified data set corresponds to the print job number (NR) of the printed card carrier; and
- a means (346) which brings the plastic card and the card carrier together and joins them if the print job numbers (NR) correspond.

11. An apparatus according to claim 10, characterized by
a printing unit (362) having the following features:
- a means containing a non-printed card carrier;
- a means (364) printing data from the produced data set and the associated print job number on a non-printed card carrier.

12. An apparatus according to claim 10 or 11, characterized in that a plurality of plastic cards and card carriers is brought together and joined, the card carriers being printed on in the sequence in which the identification marks (ID) of the plastic cards are detected and being contained in the card carrier holder (336).

13. An apparatus according to one of the claims 10 to 12, characterized in
that the print job number (NR) is a cyclically recurring number.

## Revendications

1. Procédé pour réunir et assembler des cartes en matière plastique munies d'un repère d'identification et des supports de carte imprimés associés aux cartes en matière plastique correspondantes, dans lequel sont prévus des jeux de données avec les repères d'identification (ID) associés aux cartes en matière plastique et avec des numéros d'ordre d'impression (NR) associés à chaque repère d'identification, caractérisé par les étapes suivantes consistant à :
- préparer de manière ordonnée les cartes en matière plastique (S106);
- préparer de manière ordonnée les supports de carte imprimés, sur chacun desquels est imprimé un numéro d'ordre d'impression (NR) (S108) ;
- saisir le repère d'identification (ID) d'une carte en matière plastique (S110) ;
- saisir le numéro d'ordre d'impression (NR) d'un support de carte (S112);
- à l'aide du jeu de données, déterminer si la carte en matière plastique prête à être assemblée et le support de carte correspondent (S114); et
- si la carte en matière plastique et le support de carte correspondent, les réunir et les assembler (S116).

2. Procédé pour réunir et assembler des cartes en matière plastique munies d'un repère d'identification et des supports de carte imprimés associés aux cartes en matière plastique correspondantes, caractérisé par les étapes suivantes consistant à :
- préparer des jeux de données avec des repères d'identification (ID) associés aux cartes en matière plastique ;
- associer à chaque jeu de données un numéro d'ordre d'impression (NR) ;
- préparer de manière ordonnée les cartes en matière plastique (S106) ;
- préparer de manière ordonnée les supports de carte imprimés, sur chacun desquels est imprimé un numéro d'ordre d'impression (NR) (S108) ;
- saisir le repère d'identification (ID) d'une carte en matière plastique (S110) ;
- saisir le numéro d'ordre d'impression (NR) d'un support de carte (S112) ;
- à l'aide du jeu de données, déterminer si la carte en matière plastique prête à être assemblée et le support de carte correspondent (S114) ; et
- si la carte en matière plastique et le support de carte correspondent, les réunir et les assembler (S116).

3. Procédé pour réunir et assembler des cartes en matière plastique munies d'un repère d'identification et des supports de carte imprimés associés aux cartes en matière plastique correspondantes, caractérisé par les étapes suivantes consistant à :
- préparer des jeux de données avec des repères d'identification (ID) associés aux cartes en matière plastique ;
- associer à chaque jeu de données un numéro d'ordre d'impression (NR) ;
- préparer de manière ordonnée les cartes en matière plastique (S106) ;
- préparer de manière ordonnée les supports de carte imprimés sur lesquels est déjà imprimé un numéro d'ordre d'impression (NR) (S108) ;
- saisir le repère d'identification (ID) d'une carte en matière plastique (S110) ;
- à l'aide du jeu de données, associer le numéro d'ordre d'impression (NR) à la carte en matière plastique dont le repère d'identification (ID) a été saisi ;
- saisir le numéro d'ordre d'impression (NR) d'un support de carte (S112) ;
- à l'aide du numéro d'ordre d'impression (NR), déterminer si la carte en matière plastique prête à être assemblée et le support de carte correspondent (S114) ; et
- si la carte en matière plastique et le support de carte correspondent, les réunir et les assembler.

4. Procédé pour réunir et assembler des cartes en matière plastique munies d'un repère d'identification et des supports de carte imprimés associés aux cartes en matière plastique correspondantes, caractérisé par :
a) une étape de génération de jeux de données (S1) présentant les étapes suivantes consistant à :
a1) préparer la carte en matière plastique (S1.1);
a2) saisir un repère d'identification (ID) de la carte en matière plastique (S1.2) ; et
a3) générer un jeu de données en lisant une banque de données (322) à l'aide du repère d'identification (ID) et associer un numéro d'ordre d'impression (NR) aux données lues de la banque de données, le numéro d'ordre d'impression n'étant pas associé de manière univoque aux données personnelles lues (S1.3) ; et
b) une étape de réunion et d'assemblage (S2) présentant les étapes suivantes consistant à :
b1) préparer un support de carte imprimé présentant un numéro d'ordre d'impression (NR) (S2.3) ;
b2) préparer la carte en matière plastique (S2.1) ;
b3) saisir le numéro d'ordre d'impression du support de carte imprimé (S2.4) ;
b4) saisir le repère d'identification (ID) de la carte en matière plastique (S2.2) ;
b5) déterminer, à l'aide du jeu de données déterminé par le repère d'identification (ID), si le numéro d'ordre d'impression contenu dans le jeu de données déterminé coïncide avec le numéro d'ordre d'impression (NR) du support de carte imprimé saisi (S2.5) ; et
b6) si les numéros d'ordre d'impression (NR) coïncident, réunir et assembler la carte en matière plastique et le support de carte (S2.8, S2.9).

5. Procédé suivant la revendication 4, caractérisé par les étapes suivantes, avant l'étape b), consistant à :
- préparer un support de carte non imprimé (S3.1) ; et
- imprimer sur le support de carte les données issues du jeu de données généré et du numéro d'ordre d'impression associé (S3.3).

6. Procédé suivant la revendication 4 ou 5, caractérisé par le fait qu'une pluralité de cartes en matière plastique et de supports de carte sont réunis et assemblés, les supports de carte étant générés et préparés dans l'ordre de la saisie des repères d'identification (ID) des cartes en matière plastique.

7. Procédé suivant l'une des revendications 4 à 6, caractérisé par le fait que le numéro d'ordre d'impression (NR) est un numéro se répétant de manière cyclique.

8. Dispositif pour réunir et assembler des cartes en matière plastique munies d'un repère d'identification et des supports de carte imprimés associés aux cartes en matière plastique correspondantes, caractérisé par :
- un dispositif (326) destiné à préparer de manière ordonnée les cartes en matière plastique ;
- un dispositif (336) destiné à préparer de manière ordonnée les supports de carte imprimés sur lesquels est imprimé un numéro d'ordre d'impression (NR) ;
- un premier dispositif de saisie (328) qui saisit le repère d'identification (ID) d'une carte en matière plastique ;
- un second dispositif de saisie (338) qui saisit le numéro d'ordre d'impression (NR) d'un support de carte ;
- un dispositif de traitement (330, 332) contenant des jeux de données à repères d'identification (ID), à chaque jeu de données étant associé un numéro d'ordre d'impression (NR), le dispositif de traitement (330, 332) déterminant, à l'aide du jeu de données, si la carte en matière plastique prête à être assemblée correspond avec le support de carte ; et
- un dispositif de réunion et d'assemblage (346) qui réunit et assemble la carte en matière plastique et le support de carte, lorsque ceux-ci correspondent.

9. Dispositif pour réunir et assembler des cartes en matière plastique munies d'un repère d'identification et des supports de carte imprimés associés aux cartes en matière plastique correspondantes, caractérisé par :
- un dispositif (326) destiné à préparer de manière ordonnée les cartes en matière plastique ;
- un dispositif (336) destiné à préparer de manière ordonnée les supports de carte imprimés sur lesquels est imprimé un numéro d'ordre d'impression (NR) ;
- un premier dispositif de saisie (328) qui saisit le repère d'identification (ID) d'une carte en matière plastique ;
- un second dispositif de saisie (338) qui saisit le numéro d'ordre d'impression (NR) d'un support de carte ;
- un dispositif de traitement (330, 332) contenant des jeux de données à repères d'identification (ID), à chaque jeu de données étant associé un numéro d'ordre d'impression (NR), le dispositif de traitement (330, 332) associant, à l'aide du jeu de données, un numéro d'ordre d'impression (NR) à la carte en matière plastique dont le repère d'identification (ID) a été saisi et déterminant si les numéros d'ordre d'impression (ID) de la carte en matière plastique et du support de carte correspondent; et
- un dispositif de réunion et d'assemblage (346) qui réunit et assemble la carte en matière plastique et le support de carte, lorsque ceux-ci correspondent.

10. Dispositif pour réunir et assembler des cartes en matière plastique munies d'un repère d'identification et des supports de carte imprimés associés aux cartes en matière plastique correspondantes, caractérisé par :
un dispositif (310) destiné à générer un jeu de données, présentant les caractéristiques suivantes :
- un dispositif de support (314 ; 326) dans lequel est contenue la carte en matière plastique ;
- un dispositif de saisie (312 ; 320) qui saisit un repère d'identification (ID) de la carte en matière plastique ;
- un dispositif de banque de données (322 ;332) contenant des données en fonction du repère d'identification ; et
- un dispositif de traitement (320 ; 330) provoquant un accès à la banque de données (322 ;332) à l'aide du repère d'identification (ID) et générant un jeu de données en lisant la banque de données (322 ;332) et en associant un numéro d'ordre d'impression (NR) aux données lues ;
un dispositif de réunion et d'assemblage (324) présentant les caractéristiques suivantes :
- un dispositif de maintien de cartes en matière plastique (326), dans lequel est contenue la carte en matière plastique ;
- un dispositif de maintien de supports de carte (336), dans lequel est contenu un support de carte imprimé présentant un numéro d'ordre d'impression ;
- un dispositif (338) de saisie du numéro d'ordre d'impression (NR) sur le support de carte imprimé ;
- un dispositif (328) de saisie du repère d'identification (ID) de la carte en matière plastique ;
- un dispositif de traitement (330) déterminant, sur base du jeu de données déterminé par le repère d'identification (ID) saisi, si le numéro d'ordre d'impression (NR) contenu dans le jeu de données déterminé coïncide avec le numéro d'ordre d'impression (NR) du support de carte imprimé ; et
- un dispositif (346) qui réunit et assemble la carte en matière plastique et le support de carte imprimé lorsque les numéros d'ordre d'impression (NR) coïncident.

11. Dispositif suivant la revendication 10, caractérisé par un système d'imprimante (364) présentant les caractéristiques suivantes :
un dispositif contenant un support de carte non imprimé ;
un dispositif (364) qui imprime sur un support de carte non imprimé des données issues du jeu de données généré et du numéro d'ordre d'impression associé.

12. Dispositif suivant la revendication 10 ou 11, caractérisé par le fait qu'une pluralité de cartes en matière plastique et de supports de carte sont réunis et assemblés, les supports de carte étant imprimés dans l'ordre de la saisie des repères d'identification (ID) des cartes en matière plastique et contenus dans le dispositif de maintien de supports de carte (336).

13. Dispositif suivant l'une des revendications 10 à 12, caractérisé par le fait que le numéro d'ordre d'impression (NR) est un numéro se répétant de manière cyclique.
